# EUROPÄISCHE PATENTSCHRIFT

(11) **EP 1 669 157 B1**
(45) Veröffentlichungstag und Bekanntmachung des Hinweises auf die Patenterteilung: **04.04.2007**
(21) Anmeldenummer: 04028956.3
(22) Anmeldetag: 07.12.2004
(51) Int. Cl.: B23K 26/38, F02M 61/16, B23K 26/42, B25G 1/08

(54) **Bohrvorrichtung zur Herstellung einer Bohrung mittels Laserstrahlung mit einem Führungsdorn und einem durch eine Klemmeinrichtung am Führungsdorn gehaltenen Schutzelement**
Laser drilling device for producing a hole with a rod and a protective element fixed at the end of the rod
Dispositif de perçage par laser d'un trou avec une tige et un élément de protection fixé à l'extrémité de la tige

(43) Veröffentlichungstag der Anmeldung: 14.06.2006
(73) Patentinhaber: Delphi Technologies, Inc., Troy, MI 48007 (US)
(72) Erfinder: Giedl-Wagner, Roswitha, Dr., 94469 Deggendorf (DE); Haimerl, Andreas, 94336 Hunderdorf (DE)
(74) Vertreter: Manitz, Finsterwald & Partner GbR

(56) Entgegenhaltungen:
- EP-A- 0 452 798
- DE-A1- 19 958 302
- US-A- 1 435 919
- US-A- 5 399 051
- US-A- 5 994 667
- US-A- 6 070 813
- PATENT ABSTRACTS OF JAPAN Bd. 1996, Nr. 01, 31. Januar 1996 (1996-01-31) & JP 07 241689 A (OLYMPUS OPTICAL CO LTD), 19. September 1995 (1995-09-19)

## Beschreibung

Die Erfindung betrifft eine Bohrvorrichtung zur Herstellung einer in einen Hohlraum eines Werkstücks, insbesondere einer Kraftstoffeinspritzdüse, mündenden Bohrung mittels Laserstrahlung, mit einer in den Hohlraum einführbaren und zwischen eine Mündungsöffnung der Bohrung und einen der Mündungsöffnung gegenüberliegenden und den Hohlraum begrenzenden Wandabschnitt des Werkstücks bringbaren Schutzvorrichtung.

Eine derartige Bohrvorrichtung ist grundsätzlich bekannt. Die Schutzvorrichtung dient dazu, den der Mündungsöffnung der Bohrung gegenüberliegenden Wandabschnitt vor einer Beschädigung durch die Laserstrahlung zu schützen, sobald diese nach Durchbohrung des Werkstücks in den Hohlraum eintritt.

Eine bekannte Schutzvorrichtung umfasst ein aus hochfestem Glas gebildetes Rohr, dessen Innenwandung mit einer Reflexionsschicht, beispielsweise einer Gold- oder Silberschicht, versehen ist. Durch eine im Bereich der Mündungsöffnung der Bohrung befindliche Öffnung des Rohrs kann die aus der Mündungsöffnung austretende Laserstrahlung in das Rohr einkoppeln. Nach dem Eintritt in das Rohr wird die Laserstrahlung an der Reflexionsschicht vielfach hin und her reflektiert und auf diese Weise aus der Schutzvorrichtung herausgeführt bzw. in seiner Energie verringert.

Als problematisch erweist sich bei dieser bekannten Bohrvorrichtung der Aufwand, der zur Herstellung der rohrförmigen Schutzvorrichtung und insbesondere zur Beschichtung der Innenwandung erforderlich ist. Darüber hinaus vermag eine aus Gold oder Silber gebildete Reflexionsschicht einer Bestrahlung mit kurzen Laserpulsen, die eine erhöhte Fluenz aufweisen, nicht standzuhalten. Aufgrund der Ausbildung aus Glas besteht bei der bekannten Schutzvorrichtung außerdem eine gewisse Bruchgefahr.

Eine Bohrvorrichtung gemäß dem Oberbegriff des Anspruchs 1 ist aus der US-A-5 994 667 oder der US-A-6 070 813 bekannt. Bei beiden Bohrvorrichtungen umfasst die Schutzvorrichtung ein in den Hohlraum eines zu bearbeitenden Werkstücks einführbares Schutzelement, welches ein die Laserstrahlung zumindest teilweise absorbierendes Material aufweist.

Der Erfindung liegt die Aufgabe zugrunde, eine Bohrvorrichtung der eingangs genannten Art zu schaffen, die mit einem geringeren wirtschaftlichen Aufwand herstellbar und betreibbar ist.

Zur Lösung der Aufgabe ist eine Bohrvorrichtung mit den Merkmalen des Anspruchs 1 vorgesehen.

Die erfindungsgemäße Bohrvorrichtung ist im Anspruch I definiert.

Durch die Anordnung eines ein die Laserstrahlung zumindest teilweise absorbierendes Material aufweisenden Schutzelements zwischen der Mündungsöffnung und dem der Mündungsöffnung gegenüberliegenden Wandabschnitt des Werkstücks kann die Energie einer aus der Mündungsöffnung in den Hohlraum eintretenden Laserstrahlung wirksam verringert werden.

Vorzugsweise ist das Schutzelement dabei so ausgebildet bzw. das absorbierende Material derart gewählt, dass allenfalls ein minimaler Anteil der in das Schutzelement eingekoppelten Laserstrahlung aus dem Schutzelement wieder austritt und dass dieses aus dem Schutzelement gegebenenfalls wieder austretende Licht eine so geringe Energie aufweist, dass die den Hohlraum begrenzende Wand des Werkstücks durch das Licht nicht beschädigt wird.

Dadurch, dass die Verminderung der Energie der Laserstrahlung erfindungsgemäß auf dem physikalischen Effekt der Absorption beruht und es z.B. keiner optischen Leitung der in das Schutzelement eingekoppelten Laserstrahlung bedarf, kann das Schutzelement massiv, d.h. nicht hohl, ausgebildet sein. Dies vereinfacht nicht nur die Herstellung der Schutzvorrichtung, sondern verringert auch die Bruchgefahr des Schutzelements. Dadurch ist die Wirtschaftlichkeit der erfindungsgemäßen Bohrvorrichtung nicht nur bezüglich ihrer Herstellung, sondern auch hinsichtlich ihres Betriebs erhöht.

Die erfindungsgemäß vorgesehene Klemmung des Schutzelements in der Schutzvorrichtung ermöglicht einen schnellen und einfachen Austausch des Schutzelements, beispielsweise wenn dieses nach einer gewissen Anzahl von Bohrvorgängen verbraucht, d.h. zumindest teilweise verdampft ist. Dadurch ist die Handhabbarkeit der Schutzvorrichtung erheblich vereinfacht und die Wirtschaftlichkeit der Bohrvorrichtung insgesamt noch weiter erhöht.

Vorteilhafte Ausbildungen der Erfindung sind den Unteransprüchen, der Beschreibung und der Zeichnung zu entnehmen.

Gemäß einer bevorzugten Ausführungsform der erfindungsgemäßen Bohrvorrichtung ist das Schutzelement einer in den Hohlraum eingeführten Schutzvorrichtung um seine Längsmittelachse rotierbar und/oder axial verschiebbar. Dies ermöglicht eine Bewegung des Schutzelements relativ zu der Mündungsöffnung. Beispielsweise kann die axiale Verschiebung des Schutzelements in Form einer translatorischen Oszillation ausgeführt werden.

Durch eine solche Rotations- und/oder Translationsbewegung des Schutzelements wird verhindert, dass ein aus der Mündungsöffnung aus- und in den Hohlraum eintretender Laserstrahl stets in ein und demselben Oberflächenbereich des Schutzelements in dieses einkoppelt und das Schutzelement dadurch lokal besonders stark erhitzt und letztlich verdampft. Die Relativbewegung des Schutzelements sorgt vielmehr dafür, dass der Energieeintrag der Laserstrahlung über einen größeren Oberflächenbereich des Schutzelements verteilt erfolgt und dadurch ein Materialabtrag des Schutzelements verringert wird. Dies führt zu einer Erhöhung der Lebensdauer des Schutzelements und somit zu einer noch besseren Wirtschaftlichkeit der Bohrvorrichtung.

Vorteilhafterweise ist die Klemmeinrichtung relativ zum Führungsdorn bewegbar in dem Führungsdorn gelagert und insbesondere bezüglich des Führungsdorns verdrehbar und/oder axial verschiebbar. Zur Bewegung des Schutzelements wird mit anderen Worten weder die Schutzvorrichtung insgesamt, noch der Führungsdorn relativ zum Werkstück bewegt. Vielmehr erfolgt die Bewegung des Schutzelements ausschließlich durch eine Rotation und/oder Translation der das Schutzelement haltenden Klemmeinrichtung relativ zum Führungsdorn.

Der Führungsdorn kann somit nicht nur zur Führung der Klemmeinrichtung und des Schutzelements, sondern auch zur Führung des Werkstücks vorgesehen sein. Beispielsweise kann das Werkstück während eines Bohrvorgangs mit einer gewissen Festigkeit auf dem Führungsdorn aufsitzen. Der Führungsdorn erfüllt in diesem Fall also eine Doppelfunktion, welche zu einer weiteren Vereinfachung des Aufbaus und der Bedienung der Bohrvorrichtung beiträgt.

Besonders bevorzugt ist es, wenn wenigstens ein Austauschschutzelement in der Schutzvorrichtung und insbesondere in der Klemmeinrichtung untergebracht ist. Die Schutzvorrichtung umfasst somit einen Vorrat an Schutzelementen, auf die bei einem erforderlichen Austausch eines Schutzelements unmittelbar zugegriffen werden kann. Dies bedeutet eine weitere erhebliche Vereinfachung der Handhabbarkeit der Schutzvorrichtung und somit der Bohrvorrichtung insgesamt.

Vorteilhafterweise sind mehrere Austauschschutzelemente hintereinander und insbesondere axial verschiebbar in der Klemmeinrichtung angeordnet. Dies stellt eine besonders platzsparende Lagerung der Austauschschutzelemente in der Schutzvorrichtung dar. Durch die axiale Verschiebbarkeit der Austauschschutzelemente in der Klemmeinrichtung sind die Austauschschutzelemente bei Bedarf leicht aus der Klemmeinrichtung entnehmbar.

Besonders bevorzugt ist es, wenn das Schutzelement durch Lösen der Klemmeinrichtung und Verschieben der Austauschschutzelemente aus der Schutzvorrichtung entfernbar und durch ein nachfolgendes Austauschschutzelement ersetzbar ist. Dies ermöglicht einen besonders einfachen Austausch eines verbrauchten, z.B. zumindest teilweise verdampften, Schutzelements. Es ist lediglich erforderlich, die Klemmeinrichtung zu lösen und die in der Klemmeinrichtung gelagerten Austauschschutzelemente so weit nach vorne zu schieben, bis das verbrauchte Schutzelement aus der Klemmeinrichtung herausgedrückt und das vorderste Austauschschutzelement als neues Schutzelement korrekt in der Schutzvorrichtung positioniert ist. Sobald die Klemmeinrichtung mit dem neuen Schutzelement klemmend in Eingriff gebracht wurde, ist die Schutzvorrichtung wieder einsatzbereit.

Gemäß einer weiteren Ausführungsform ist ein Druckfluid, insbesondere Druckwasser, Druckluft oder ein anderes Gas, wie z.B. Argon, in einen Zwischenraum zwischen dem Schutzelement und einer den Hohlraum begrenzenden Wand einleitbar. Das Druckfluid bewirkt eine Kühlung des Schutzelements. Insbesondere trägt es dazu bei, eine durch die Absorption der Laserstrahlung verursachte Verdampfung von Material des Schutzelements zu verhindern, wodurch die Lebensdauer des Schutzelements noch weiter erhöht wird. Darüber hinaus kann das Druckfluid dazu beitragen, durch die Laserstrahlung abgetragenes Material des Schutzelements und/oder des Werkstücks aus dem Hohlraum heraus zu transportieren.

Die Schutzvorrichtung kann einen, insbesondere zwischen der Klemmeinrichtung und dem Führungsdorn verlaufenden, Kanal zum Einleiten des Druckfluids aufweisen. Dies ermöglicht eine einfache Zuführung des Druckfluids in den Hohlraum.

Bevorzugt ist bzw. sind das Schutzelement und gegebenenfalls die Austauschschutzelemente massiv, d.h. nicht hohl, und insbesondere stabförmig ausgebildet. Dies erhöht die Stabilität des Schutzelements bzw. der Austauschschutzelemente. Außerdem ist die Herstellung eines solchen Schutzelements bzw. solcher Austauschschutzelemente vereinfacht, da diese z.B. aus einem Drahtmaterial gebildet sein können.

Gemäß einer weiteren vorteilhaften Ausführungsform ist die Form des Schutzelements und gegebenenfalls der Austauschschutzelemente im Bereich ihres vorderen Endes der Gestalt des Hohlraums im Bereich der Mündungsöffnung nachgebildet, um den Zwischenraum zwischen dem Schutzelement und einer den Hohlraum begrenzenden Wand zu minimieren.

Dies ermöglicht zum einen eine optimale Ausnutzung des zur Verfügung stehenden Raumes durch das die Laserstrahlung absorbierende Material und trägt zu einer besonders wirksamen Verringerung der Energie der in den Hohlraum eintretenden Laserstrahlung bei. Darüber hinaus ist eine maximale Menge an absorbierendem Material in den Hohlraum einbringbar, wodurch bei der Absorption eine erhöhte Menge von Energie in Wärme umwandelbar ist, ohne dass es zu einer Verdampfung des Schutzelements kommt. Dadurch wird die Lebensdauer des Schutzelements und somit die Wirtschaftlichkeit der Bohrvorrichtung noch weiter erhöht.

Nachfolgend wird die Erfindung rein beispielhaft anhand zweier vorteilhafter Ausführungsformen unter Bezugnahme auf die Zeichnung beschrieben. Es zeigen:
- Fig. 1: eine erste Ausführungsform der Schutzvorrichtung einer erfindungsgemäßen Bohrvorrichtung, wobei die Schutz-vorrichtung in den Hohlraum eines Werkstücks eingeführt ist; und
- Fig. 2: eine zweite Ausführungsform der Schutzvorrichtung.

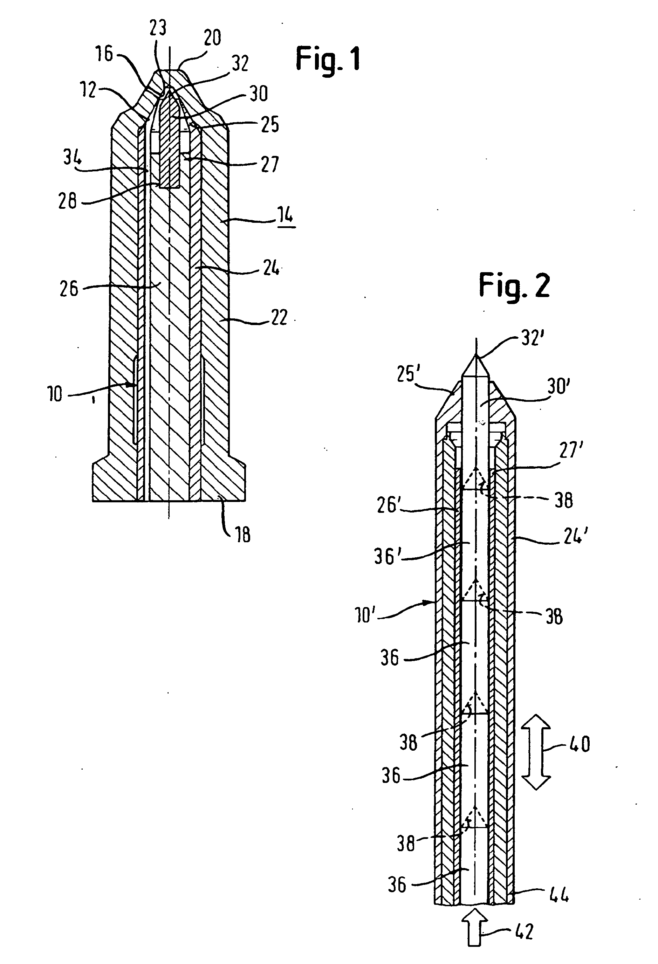

In Fig. 1 ist eine erste Ausführungsform der Schutzvorrichtung 10 einer erfindungsgemäßen Bohrvorrichtung zur Herstellung einer in einen Hohlraum 12 eines Werkstücks 14 mündenden Bohrung 16 mittels Laserstrahlung dargestellt. Bei dem hier gezeigten Ausführungsbeispiel ist das Werkstück 14 eine Kraftstoffeinspritzdüse.

Der Hohlraum 12 ist im Bereich eines hinteren Endes 18 der Einspritzdüse 14 offen und im Bereich eines vorderen Endes 20 der Einspritzdüse 14 geschlossen. Bei dem hier gezeigten Ausführungsbeispiel weist der Hohlraum 12 ferner über die gesamte Länge der Einspritzdüse 14 einen im Wesentlichen runden Querschnitt auf. Der Durchmesser des Hohlraums 12 ist in einem Hauptabschnitt 22 der Einspritzdüse 14 konstant und nimmt im Bereich des vorderen Endes 20 der Einspritzdüse 14 ab. Vom hinteren Ende 18 der Einspritzdüse 14 aus gesehen weist der Hohlraum 12 also eine zunächst zylindrische Gestalt auf, die sich an ihrem vorderen Ende kegelförmig verjüngt.

Wie bereits erwähnt wurde, dient die erfindungsgemäße Bohrvorrichtung zur Durchbohrung der Einspritzdüse 14 im Bereich ihres vorderen Endes 20. Als Bohrwerkzeug ist ein nicht gezeigter Laserstrahl vorgesehen, der aus kurzen energiereichen Laserpulsen gebildet sein kann. In Fig. 1 ist die bereits fertiggestellte, in den Hohlraum 12 mündende Bohrung 16 dargestellt.

Um zu verhindern, dass der nach Durchbohrung der Einspritzdüse 14 in den Hohlraum 12 eintretende Laserstrahl in einem der Mündungsöffnung 23 der Bohrung 16 gegenüberliegenden Bereich die den Hohlraum 12 begrenzende Wand der Einspritzdüse 14 beschädigt, ist die Schutzvorrichtung 10 während des Bohrvorgangs in den Hohlraum 12 eingeführt, wie es in Fig. 1 gezeigt ist.

Die Schutzvorrichtung 10 umfasst einen im Wesentlichen hohlzylinderförmigen Führungsdorn 24, dessen äußere Gestalt an die Form des Hohlraums 12 angepasst ist.

Entsprechend dem Hohlraum 12 verjüngt sich auch der Führungsdorn 24 im Bereich seines vorderen Endes 25. Der Führungsdorn 24 ist so ausgebildet, dass er einerseits leicht in den Hohlraum 12 einführbar ist und andererseits die Einspritzdüse 14 während des Bohrvorgangs sicher auf dem Führungsdorn 24 aufsitzt.

In dem Führungsdorn 24 ist eine zylindrische und insbesondere stabförmige Klemmeinrichtung 26 bezüglich des Führungsdorns 24 rotierbar und axial verschiebbar gelagert. Im Bereich ihres vorderen Endes 27 weist die Klemmeinrichtung 26 eine Klemmaufnahme 28 auf, in welcher ein Schutzelement 30 klemmend gehalten ist.

Das Schutzelement 30 ist stabförmig ausgebildet und läuft an seinem vorderen Ende 32 kegelspitzförmig zu. Das Schutzelement 30 ist massiv, d.h. nicht hohl, ausgebildet und weist ein Material auf, welches die zum Durchbohren der Einspritzdüse 14 verwendete Laserstrahlung besonders gut absorbiert. Als geeignete Materialien kommen beispielsweise Wolfram, Molybdän, Stahl, Kupfer oder industriell gefertigter Diamant in Frage.

Der Durchmesser des Schutzelements 30 sowie die Neigung seines kegelspitzförmigen vorderen Endes 32 sind so gewählt, dass das Schutzelement 30 den Hohlraum 12 im Bereich der Mündungsöffnung der Bohrung 16 weitgehend ausfüllt.

Durch ein entsprechendes Rotieren und/oder axiales Verschieben, z.B. in Form einer translatorischen Oszillation, der Klemmeinrichtung 26 in dem Führungsdorn 24 ist das Schutzelement 30 relativ zu der Mündungsöffnung der Bohrung 16 bewegbar.

Dadurch wird verhindert, dass ein durch die Bohrung 16 in den Hohlraum 12 eintretender Laserstrahl stets an ein und derselben Stelle in das Schutzelement 30 einkoppelt und dieses an der besagten Stelle besonders stark erhitzt und gegebenenfalls verdampft.

Vorzugsweise wird die Bewegung des Schutzelements 30 relativ zu der Bohrung 16 so ausgeführt, dass der während des Bohrvorgangs in den Hohlraum 12 eintretende Laserstrahl gleichmäßig über einen größeren Oberflächenbereich des Schutzelements 30 verteilt in dieses einkoppelt.

Dadurch, dass der Energieeintrag in das Schutzelement 30 somit nicht lokal begrenzt, sondern über einen größeren Oberflächenbereich verteilt erfolgt, wird die durch die Absorption der Laserstrahlung verursachte Erwärmung des Schutzelements 30 verlangsamt und folglich die Gefahr eines Abtrages von Material des Schutzelements 30 durch Verdampfen reduziert. Im Ergebnis wird die Lebensdauer des Schutzelements 30 erhöht.

Die Schutzvorrichtung 10 umfasst ferner einen sich axial erstreckenden und zwischen der Klemmeinrichtung 26 und einer Innenwand des Führungsdorns 24 verlaufenden Kanal 34, durch welchen ein Druckfluid, beispielsweise Druckwasser, Druckluft oder ein anderes Gas, wie z.B. Argon, in den vorderen Bereich des Hohlraums 12 und insbesondere in den Zwischenraum zwischen dem vorderen Ende 32 des Schutzelements 30 und den den Hohlraum 12 begrenzenden und die Mündungsöffnung der Bohrung 16 umgebenden Wandbereich der Einspritzdüse 14 eingeleitet werden kann.

Das in den Hohlraum 12 eingeleitete Druckmedium trägt dazu bei, die durch die Absorption der Laserstrahlung in dem Schutzelement 30 erzeugte Wärme abzuleiten, es bewirkt mit anderen Worten also eine Kühlung des Schutzelements 30. Durch die Kühlung des Schutzelements 30 wird die Erhitzung des Schutzelements 30 noch weiter verlangsamt und ein Materialverlust des Schutzelements 30 durch Verdampfung noch weiter hinausgezögert. Dies resultiert in einer weiteren Erhöhung der Lebensdauer des Schutzelements 30.

Darüber hinaus wird durch den Laserstrahl abgetragenes Material der Einspritzdüse 14 und/oder des Schutzelements 30 durch das Druckmedium aus dem Hohlraum 12 hinaus transportiert. Der Auslass des Druckmediums aus dem Hohlraum 12 erfolgt vorzugsweise durch einen in Fig. 1 nicht dargestellten Auslasskanal der Schutzvorrichtung 10.

Ist das Schutzelement 30 nach einer gewissen Anzahl von Bohrvorgängen verbraucht, d.h. ist so viel Material des Schutzelements 30 verdampft, dass es die aus der Mündungsöffnung 23 der Bohrung 16 in den Hohlraum 12 eintretende Laserstrahlung nicht mehr wirksam absorbieren kann, so wird das Schutzelement 30 ausgetauscht.

Zu diesem Zweck wird die Klemmeinrichtung 26 aus dem Führungsdorn 24 herausgezogen und das verbrauchte Schutzelement 30 aus der Klemmaufnahme 28 entnommen. Nach Einstecken eines neuen Schutzelements 30 in die Klemmaufnahme 28 wird die Klemmeinrichtung 26 wieder in den Führungsdorn 24 eingeführt und gegebenenfalls in diesem gesichert. Die Schutzvorrichtung 10 kann nun in eine nächste zu durchbohrende Einspritzdüse 14 eingesetzt zu werden.

In Fig. 2 ist eine zweite Ausführungsform der Schutzvorrichtung 10' dargestellt, bei welcher der Austausch eines verbrauchten Schutzelements 30' noch weiter vereinfacht ist.

Die Schutzvorrichtung 10' gemäß zweiter Ausführungsform umfasst ebenfalls einen hohlzylindrischen Führungsdorn 24', der sich im Bereich seines vorderen Endes 25' kegelförmig verjüngt. Wie bei der ersten Ausführungsform ist eine Klemmeinrichtung 26' bezüglich des Führungsdorns 24' rotierbar und/oder axial verschiebbar in dem Führungsdorn 24' gelagert.

Im Bereich des vorderen Endes 27' der Klemmeinrichtung 26' ist ein Schutzelement 30' klemmend gehalten. Hinsichtlich der Ausbildung des Schutzelements 30' wird auf die voranstehende Beschreibung des Schutzelements 30 der ersten Ausführungsform verwiesen.

Die Klemmeinrichtung 26' gemäß der zweiten Ausführungsform unterscheidet sich von der in Fig. 1 gezeigten Klemmeinrichtung 26 darin, dass sie hohlzylindrisch ausgebildet ist.

Im Inneren der Klemmeinrichtung 26' sind mehrere Austauschschutzelemente 36' untergebracht, deren Ausbildung derjenigen des Schutzelements 30' gleicht. Die Austauschschutzelemente 36 sind der Länge nach hintereinander angeordnet, wobei das vordere Ende eines hinteren Austauschschutzelements 36 jeweils an dem hinteren Ende eines vorderen Austauschschutzelements 36 anliegt.

Um eine möglichst dichte Anordnung von Austauschschutzelementen 36' in der Schutzvorrichtung 10' zu erreichen, weisen die Austauschschutzelemente 36 an ihrem hinteren Ende jeweils eine kegelförmige Vertiefung 38 auf, deren Form an das kegelspitzförmige vordere Ende der Austauschschutzelemente 36 angepasst ist. Gleiches gilt auch für das Schutzelement 30', welches sich darin von dem Schutzelement 30 der ersten Ausführungsform unterscheidet.

Die Austauschschutzelemente 36 sind bei dem dargestellten Ausführungsbeispiel stationär in der Schutzvorrichtung 10' gelagert, d.h. sie bewegen sich nicht mit der Klemmeinrichtung 26' mit, wenn diese zur Rotation und/oder translatorischen Oszillation des Schutzelements 30', angedeutet durch den Pfeil 40 in Fig. 2, während eines Bohrvorgangs bewegt wird. Um eine derartige, insbesondere axiale, Bewegung des Schutzelements 30' relativ zu den Austauschschutzelementen 36 zu ermöglichen, weist das Schutzelement 30' einen geringen Abstand zu dem nachfolgenden vordersten Austauschschutzelement 36' auf.

Wie durch den Pfeil 42 dargestellt ist, können am hinteren 44 Ende der Schutzvorrichtung 10' weitere Austauschschutzelemente 36 in die Klemmeinrichtung 26' eingeführt bzw. nachgeschoben werden.

Zum Austausch eines verbrauchten Schutzelements 30' ist es lediglich erforderlich, die Klemmeinrichtung 26' zu lösen und die Austauschelemente 36 von hinten nach vorne durch die Klemmeinrichtung 26' hindurchzuschieben.

Durch diese Verschiebung der Austauschschutzelemente 36 wird das Schutzelement 30' aus der Klemmeinrichtung 26' herausgedrückt, und das nachfolgende Austauschschutzelement 36' wird neues Schutzelement 30'. Sobald dieses korrekt positioniert ist, d.h. weit genug aus der Klemmeinrichtung 26' und aus dem Führungsdorn 24' heraussteht, wird die Klemmeinrichtung 26' mit dem neuen Schutzelement 30' in Eingriff gebracht, um dieses zu fixieren.

Bei dieser Ausführungsform der Schutzvorrichtung 10' ist es also nicht erforderlich, die Klemmeinrichtung 26' zum Austauschen des Schutzelements 30' aus dem Führungsdorn 24' zu entnehmen.

### Bezugszeichenliste

- 10: Schutzvorrichtung
- 12: Hohlraum
- 14: Werkstück
- 16: Bohrung
- 18: hinteres Ende
- 20: vorderes Ende
- 22: Hauptabschnitt
- 23: Mündungsöffnung
- 24: Führungsdorn
- 25: vorderes Ende
- 26: Klemmeinrichtung
- 27: vorderes Ende
- 28: Klemmaufnahme
- 30: Schutzelement
- 32: vorderes Ende
- 34: Kanal
- 36: Austauschschutzelement
- 38: Vertiefung
- 40: translatorische Oszillation
- 42: Einführrichtung
- 44: hinteres Ende

## Patentansprüche

1. Bohrvorrichtung zur Herstellung einer in einen Hohlraum (12) eines Werkstücks (14), insbesondere einer Kraftstoffeinspritzdüse, mündenden Bohrung (16) mittels Laserstrahlung, mit einer in den Hohlraum (12) einführbaren Schutzvorrichtung (10), die ein zwischen eine Mündungsöffnung (23) der Bohrung (16) und einen der Mündungsöffnung (23) gegenüberliegenden und den Hohlraum (12) begrenzenden Wandabschnitt des Werkstücks (14) bringbares Schutzelement (30) umfasst, welches ein die Laserstrahlung zumindest teilweise absorbierendes Material aufweist,
**dadurch gekennzeichnet,**
**dass** die Schutzvorrichtung (10) einen in den Hohlraum (12) einführbaren im wesentlichen hohlzylinderförmigen Führungsdorn (24), dessen äußere Gestalt an die Form des Hohlraums (12) angepasst ist, und eine zylindrische Klemmeinrichtung (26) umfasst und dass das Schutzelement (30) im Bereich eines in den Hohlraum (12) einzuführenden vorderen Endes (25) des Führungsdorns (24) durch eine Klemmaufnahme (28) der Klemmeinrichtung (26) gehalten ist.

2. Bohrvorrichtung nach Anspruch 1,
**dadurch gekennzeichnet,**
**dass** das Schutzelement (30) einer in den Hohlraum (12) eingeführten Schutzvorrichtung (10) um seine Längsmittelachse rotierbar und/oder axial verschiebbar ist.

3. Bohrvorrichtung nach Anspruch 1 oder 2,
**dadurch gekennzeichnet,**
**dass** die Klemmeinrichtung (26) relativ zum Führungsdorn (24) bewegbar in dem Führungsdorn (24) gelagert ist und insbesondere bezüglich des Führungsdorns (24) verdrehbar und/oder axial verschiebbar ist.

4. Bohrvorrichtung nach einem der vorherigen Ansprüche,
**dadurch gekennzeichnet,**
**dass** wenigstens ein Austauschschutzelement (36) in der Schutzvorrichtung (10) und insbesondere in der Klemmeinrichtung (26) untergebracht ist.

5. Bohrvorrichtung nach Anspruch 4,
**dadurch gekennzeichnet,**
**dass** mehrere Austauschschutzelemente (36) hintereinander und insbesondere axial verschiebbar in der Klemmeinrichtung (26) angeordnet sind.

6. Bohrvorrichtung nach Anspruch 4 oder 5,
**dadurch gekennzeichnet,**
**dass** das Schutzelement (30) durch Lösen der Klemmeinrichtung (26) und Verschieben der Austauschschutzelemente (36) aus der Schutzvorrichtung (10) entfernbar und durch ein nachfolgendes Austauschschutzelement (36) ersetzbar ist.

7. Bohrvorrichtung nach einem der vorherigen Ansprüche,
**dadurch gekennzeichnet,**
**dass** ein Druckfluid, insbesondere Druckwasser, Druckluft oder ein anderes Gas, wie z.B. Argon, in einen Zwischenraum zwischen dem Schutzelement (30) und einer den Hohlraum (12) begrenzenden Wand einleitbar ist.

8. Bohrvorrichtung nach Anspruch 7,
**dadurch gekennzeichnet,**
**dass** die Schutzvorrichtung (10) einen, insbesondere zwischen der Klemmeinrichtung (26) und dem Führungsdorn (24) verlaufenden, Kanal (34) zum Einleiten des Druckfluids aufweist.

9. Bohrvorrichtung nach einem der vorherigen Ansprüche,
**dadurch gekennzeichnet,**
**dass** das Schutzelement (30) und ggf. die Austauschschutzelemente (36) massiv, d.h. nicht hohl, und insbesondere stabförmig ausgebildet ist bzw. sind.

10. Bohrvorrichtung nach einem der vorherigen Ansprüche,
**dadurch gekennzeichnet,**
**dass** die Form des Schutzelements (30) und ggf. der Austauschschutzelemente (36) im Bereich ihres vorderen Endes der Gestalt des Hohlraums (12) im Bereich der Mündungsöffnung (23) nachgebildet ist, um den Zwischenraum zwischen dem Schutzelement (30) und einer den Hohlraum (12) begrenzenden Wand zu minimieren, und/oder dass Schutzelement (30) und ggf. die Austauschschutzelemente (36) sich im Bereich ihres vorderen Endes verjüngen und insbesondere ein im Wesentlichen spitz zulaufendes vorderes Ende aufweisen.

## Claims

1. A boring apparatus for the manufacture of a bore (16) opening into a hollow space (12) of a workpiece (14), in particular of a fuel injection nozzle, by means of laser radiation, comprising a protective apparatus (10) which can be introduced into the hollow space (12) and includes a protective element (30) which can be brought between a mouth (23) of the bore (16) and a wall section of the workpiece (14) disposed opposite the mouth (23) and bounding the hollow space (12), said protective element comprising a material absorbing the laser radiation at least partly,
**characterized in that** the protective apparatus (10) includes a substantially hollow cylindrical guide element (24) which can be introduced into the hollow space (12) and whose outer shape is matched to the shape of the hollow space (12) and a cylindrical clamping device (26);
and **in that** the protective element (30) is held by a clamping receiver (28) of the clamping device (26) in the region of a front end (25) of the guide element (24) to be introduced into the hollow space (12).

2. A boring apparatus in accordance with claim 1, **characterized in that** the protective element (30) of a protective apparatus (10) introduced into the hollow space (12) is rotatable about its longitudinal central axis and/or is axially displaceable.

3. A boring apparatus in accordance with claim 1 or claim 2,
**characterized in that** the clamping device (26) is movably supported relative to the guide element (24) in the guide element (24) and is in particular rotatable and/or axially displaceable with respect to the guide element (24).

4. A boring apparatus in accordance with any one of the preceding claims, **characterized in that** at least one replacement protective element (36) is accommodated in the protective apparatus (10) and in particular in the clamping device (26).

5. A boring apparatus in accordance with claim 4, **characterized in that** a plurality of replacement protective elements (36) are arranged sequentially and in particular axially displaceably in the clamping device (26).

6. A boring apparatus in accordance with claim 4 or claim 5,
**characterized in that** the protective element (30) is removable by loosening of the clamping device (26) and displacement of the replacement protective elements (36) out of the protective apparatus (10) and is replaceable by a subsequent replacement element (36).

7. A boring apparatus in accordance with any one of the preceding claims, **characterized in that** a pressure fluid, in particular pressurized water, compressed air or another gas such as argon, can be introduced into an intermediate space between the protective element (30) and a wall bounding the hollow space (12).

8. A boring apparatus in accordance with claim 7, **characterized in that** the protective apparatus (10) has a passage (34), in particular a passage extending between the clamping device (26) and the guide element (24), for the introduction of the pressure fluid.

9. A boring apparatus in accordance with any one of the preceding claims, **characterized in that** the protective element (30) and, optionally, the replacement protective elements (36) is/are solid, i.e. not hollow, and is/are in particular rod-shaped.

10. A boring apparatus in accordance with any one of the preceding claims, **characterized in that** the shape of the protective element (30), and optionally of the replacement protective elements (36), is modeled in the region of its front end on the design of the hollow space (12) in the region of the mouth (23) in order to minimize the intermediate space between the protective element (30) and a wall bounding the hollow space (12); and/or **in that** the protective element (30) and, optionally, the replacement protective elements (36) tapers/ taper in the region of their front ends and in particular has/have a front end which substantially converges to a point.

## Revendications

1. Dispositif de perçage pour réaliser un perçage débouchant (16) dans un espace creux (12) d'une pièce à usiner (14), en particulier un injecteur de carburant, au moyen d'un rayonnement laser, avec un dispositif de protection (10) introductible dans l'espace creux (12), qui comprend un élément de protection (30) mobile entre un orifice d'embouchure (23) du perçage (16) et une partie de paroi de la pièce à usiner (14) limitant l'espace creux (12) et opposée à l'orifice d'embouchure (23), lequel est composé d'un matériau absorbant au moins partiellement le rayonnement laser,
**caractérisé en ce que**,
le dispositif de protection (10) comprend une tige de guidage (24) de forme sensiblement cylindrique creuse introductible dans l'espace creux (12), dont la configuration extérieure est adaptée à la forme de l'espace creux (12), et un dispositif de serrage cylindrique (26) et **en ce que** l'élément de protection (30) est maintenu dans la région d'une extrémité d'introduction avant (25) dans l'espace creux (12) de la tige de guidage (24) par un logement de serrage (28) du dispositif de serrage (26).

2. Dispositif de perçage selon la revendication 1, **caractérisé en ce que**, l'élément de protection (30) d'un dispositif de protection (10) introduit dans l'espace creux (12) est coulissant de manière axiale et/ou rotative selon son axe longitudinal central.

3. Dispositif de perçage selon la revendication 1 ou 2, **caractérisé en ce que**,
le dispositif de serrage (26) est logé dans la tige de guidage (24) de manière mobile par rapport à la tige de guidage (24) et **en ce qu'**il est déformable et/ou coulissant de manière axiale en particulier par rapport à la tige de guidage (24).

4. Dispositif de perçage selon l'une quelconque des revendications précédentes, **caractérisé en ce que**,
au moins un élément de protection de remplacement (36) est logé dans le dispositif de protection (10) et en particulier dans le dispositif de serrage (26).

5. Dispositif de perçage selon la revendication 4, **caractérisé en ce que**,
plusieurs éléments de protection de remplacement (36) sont agencés les uns derrière les autres et particulièrement coulissant de manière axiale dans le dispositif de serrage (26).

6. Dispositif de perçage selon la revendication 4 ou 5, **caractérisé en ce que**,
l'élément de protection (30) est amovible par desserrage du dispositif de serrage (26) et par coulissement de l'élément de protection de remplacement (36) dans le dispositif de protection (10) et peut être remplacé par un élément de protection de remplacement (36) suivant.

7. Dispositif de perçage selon l'une quelconque des revendications précédentes, **caractérisé en ce que**,
un fluide sous pression, en particulier de l'eau sous pression, de l'air comprimé ou un autre gaz, comme par exemple l'argon, peut être introduit dans un espace intermédiaire entre l'élément de protection (30) et une paroi limitant l'espace creux (12).

8. Dispositif de perçage selon la revendication 7, **caractérisé en ce que**,
le dispositif de protection (10) présente un canal (34) pour l'introduction du fluide sous pression, s'étendant en particulier entre le dispositif de serrage (26) et la tige de guidage (24).

9. Dispositif de perçage selon l'une quelconque des revendications précédentes, **caractérisé en ce que**,
l'élément de protection (30) et éventuellement l'élément de protection de remplacement (36) est ou sont massifs, c'est-à-dire non creux, et en particulier en forme de barre.

10. Dispositif de perçage selon l'une quelconque des revendications précédentes, **caractérisé en ce que**,
la forme de l'élément de protection (30) et éventuellement l'élément de protection de remplacement (36) dans la région de leur extrémité avant reproduit la configuration de l'espace creux (12) dans la région de l'orifice d'embouchure (23), pour réduire l'espace intermédiaire entre l'élément de protection (30) et une paroi limitant l'espace creux (12), et/ou l'élément de protection (30) et éventuellement l'élément de protection de remplacement (36) s'amincissent dans la région de leur extrémité avant et en particulier présentent un extrémité avant se terminant sensiblement en pointe.
